# EUROPÄISCHE PATENTSCHRIFT

(11) **EP 1 601 892 B1**
(45) Veröffentlichungstag und Bekanntmachung des Hinweises auf die Patenterteilung: **10.01.2007**
(21) Anmeldenummer: 04714716.0
(22) Anmeldetag: 26.02.2004
(51) Int. Cl.: F16J 15/08, F02F 11/00

(54) **FLACHDICHTUNG, INSBESONDERE ZYLINDERKOPFDICHTUNG**
FLAT GASKET, IN PARTICULAR CYLINDER-HEAD GASKET
JOINT PLAT, EN PARTICULIER JOINT DE CULASSE

(30) Priorität: 12.03.2003 DE 10310683
(43) Veröffentlichungstag der Anmeldung: 07.12.2005
(73) Patentinhaber: Federal-Mogul Sealing Systems GmbH, 57562 Herdorf (DE)
(72) Erfinder: HEILIG, Markus, 57518 Betzdorf (DE)
(86) Internationale Anmeldenummer: PCT/DE2004/000358
(87) Internationale Veröffentlichungsnummer: WO 2004/081424

(56) Entgegenhaltungen:
- EP-A- 0 473 306
- EP-A- 0 533 357
- DE-A- 10 101 604
- DE-A- 19 601 324
- DE-A- 19 809 755
- DE-U- 20 019 412
- US-A- 5 791 659
- US-B1- 6 206 381

## Beschreibung

Die Erfindung betrifft eine Flachdichtung, insbesondere Zylinderkopfdichtung für Brennkraftmaschinen.

Der DE-A 198 09 755 ist eine metallische Zylinderkopfdichtung mit wenigstens einer Dichtungslage zu entnehmen, welche eine Durchgangsöffnung für einen Kettenkasten und einen Randbereich aufweist, der benachbart zu der Kettenkastenöffnung verläuft und in welcher die Kettenkastenöffnung von einem ganz oder teilweise außerhalb des Randbereiches angeordneten elastischen Dichtelement vollständig umgeben ist. Der Randbereich umfasst hierbei eine Abstützeinrichtung für das elastische Dichtelement, das eine Sicke oder eine Halbsicke sein kann. Im Bereich der Brennraumöffnung ist kein Stopperelement vorgesehen.

Das Dokument DE U 2001 9412 zeigt eine Zylinderkopfdichtung mit Stopperelementen unterschiedlicher Dicke. Die Sicken dieser Dichtung liegen im Kraftnebenschluß.

Durch die JP-A 06117542 ist eine metallische Flachdichtung bekannt geworden, die mehrere in eine metallischen Lage eingebrachte Durchgangsöffnungen aufweist. Im Bereich der Durchgangsöffnungen sind Voll- oder Halbsicken als Dichtelement angeordnet.

Vielfach kommen in heutigen Brennkraftmaschinen Zylinderkopfdichtungen zum Einsatz, bei denen jeweils zur dauerhaft elastischen Brennraumabdichtung in Federstahl geprägte sogenannte Vollsicken verwendet werden. Vollsicken zeichnen sich dadurch aus, dass, ausgehend von einer Grundfläche des Bleches, eine Erhebung in eine Richtung geformt wird, so dass eine Kontaktlinie (Sickenkamm) zu der der Grundfläche abgewandten Seite als Abdichtlinie gebildet wird. Vollsicken stützen sich in der Ebene der Grundfläche immer mit beidseitig des Sickenkamms angeordneten sogenannten Sickenfüßen ab, d.h. in der Ebene der Grundfläche bilden sich zwei Abdichtlinien heraus. Diese Grundkonstruktion einer Vollsicke benötigt ein Mindestmaß an Platz im Querschnitt und muss durch relativ komplexe Prägewerkzeuge geformt werden.

Der Erfindung liegt die Aufgabe zugrunde, eine Flachdichtung, insbesondere Zylinderkopfdichtung für extrem begrenzte Platzverhältnisse im Bereich der Brennraumabdichtung vorzuschlagen, mit welcher die Beibehaltung bekannter Funktionseigenschaften bei reduziertem Werkzeugaufwand gegeben sein soll.

Diese Aufgabe wird gelöst durch eine Flachdichtung, insbesondere Zylinderkopfdichtung für Brennkraftmaschinen, gemäß Kombination der Merkmale des Patentanspruch 1.

Vorteilhafte Weiterbildungen des Erfindungsgegenstandes sind den Unteransprüchen zu entnehmen.

Im Vergleich zur Vollsicke wird durch den Erfindungsgegenstand ein neuartiges Brennraumabdichtkonzept, gebildet durch Stopperelemente sowie damit in Wirkverbindung bringbare Halbsicken, insbesondere für begrenzte Platzverhältnisse, vorgestellt.

Die elastische Abdichtung eines jeden Brennraumes erfolgt durch eine außerhalb der Durchgangsöffnung geschlossene, in der Regel konzentrisch verlaufende Halbsicke vorgebbarer Breite und Höhe. Die Dimensionierungen hängen hierbei vom Anwendungsfall ab. Halbsickenbreiten von 0,8 bis 2,5 mm und Höhen zwischen 0,05 und 1,0 mm sind als üblich anzusehen.

Die Brennraumhalbsicke ist vorteilhafterweise in Federstahllagen (Funktionslagen) der Flachdichtung, insbesondere der Zylinderkopfdichtung, eingeprägt. Die Anzahl der gesickten Federstahllagen kann, entsprechend den dynamischen Anforderungen der jeweiligen Brennkraftmaschine, variiert werden.
Die Brennraumhalbsicke liegt - wie bereits angesprochen - im Krafthauptschluss auf einem gegenüber der Materialstärke des Trägerelementes dicker ausgeführten Brennraumabdichtbereich (Stopperelement). Derartige Stopperelemente verhindern die weitere Reduzierung der Dichtspalthöhe im eingebauten Zustand (Betriebszustand). Stopperelemente können beispielsweise dadurch hergestellt werden, dass zusätzliche Blechabschnitte auf eine Lage, z.B. das Trägerelement, der Flachdichtung aufgeschweißt werden. Weitere Ausführungen sind mit aufgesinterten Werkstoffen, angeklebten Kunststoffen oder dergleichen vorstellbar. Der Betrag, um den die Dichtungsdicke im Bereich der Brennraumhalbsicke größer sein soll, als in den anderen Bereichen liegt üblicherweise zwischen 0,04 und 0,20 mm. Durch die so gebildete Verdickung wird erreicht, dass die von den Zylinderkopfschrauben bereitgestellte Klemmkraft maßgeblich auf die Verpressung der Halbsicke und damit zur Abdichtung des Brennraumes aufgewendet wird. Dabei bestimmt der Betrag der Verdickung wesentlich die Klemmkraftverteilung und damit die Abdichteigenschaften, jedoch auch die Verzüge der Motorbauteile, die sich umgekehrt zur Abdichtpressung verhalten.

Die Breite des Stopperelementes richtet sich hierbei maßgeblich nach der Breite der in ihrem Erstreckungsbereich angeordneten Brennraumhalbsicke. Vielfach werden Breiten in Bereichen zwischen 1 und 4 mm verwendet. Hierbei kann es vorkommen, dass die Stopperbereiche benachbarter Zylinder ineinander fließen, so dass in der Draufsicht eine Art Stopperbrille entsteht.

Die Brennraumhalbsicke kann mit einem relativ einfachen stufenförmig abgesetzten Werkzeug hergestellt werden. Derartige Werkzeuge sind kostengünstig anzufertigen und einfach zu warten bzw. nachzusetzen.

Einem weiteren Gedanken der Erfindung gemäß richtet sich der Lagenaufbau der Flachdichtung, insbesondere der Zylinderkopfdichtung, nach den Erfordernissen des jeweiligen Motors. Bevorzugt kommt, einem weiteren Gedanken der Erfindung gemäß, eine Kombination aus zwei gegensinnig gesickten Federstahllagen und einem Trägerelement zum Einsatz, das das Stopperelement aufnimmt.

Es empfiehlt sich, das das Stopperelement aufnehmende Trägerelement einseitig plan auszuführen und diese plane Fläche zu einem der Motorbauteile, bevorzugt zum Zylinderkurbelgehäuse, auszurichten. Eine derartige plane Dichtungsaußenfläche ist in der Lage, Unregelmäßigkeiten in der Kurbelgehäuseoberfläche, wie Lunker und Poren zu kaschieren und dennoch die Abdichtung zu gewährleisten. Übliche Dicken von Stopperelementen aufnehmenden Trägerelementen liegen zwischen 0,1 bis 0,5 mm.

Bei einer geraden Anzahl von Federstahllagen ist darauf zu achten, dass die gegensinnig mit Halbsicken versehenen Lagen so angeordnet werden, dass die aus der Dichtungsebene herausragenden Schenkel der Halbsicken an der Brennraumkante am korrespondierenden Motorbauteil anliegen. Dadurch kann eine gewisse Verstärkung der Abdichtpressung durch Auffederung der Schenkel unter Gasdruckeinwirkung herbeigeführt werden.

Der Erfindungsgegenstand ist anhand eines Ausführungsbeispiels in der Zeichnung dargestellt und wird wie folgt beschrieben. Es zeigen:
- Figur 1: Draufsicht auf eine Zylinderkopfdichtung;
- Figur 2: Schnitt gemäß Linie A-A der Figur 1;
- Figur 3: Simulierung des Einbauzustandes (Betriebszustand) einer Zylinderkopfdichtung gemäß Figuren 1 und 2.

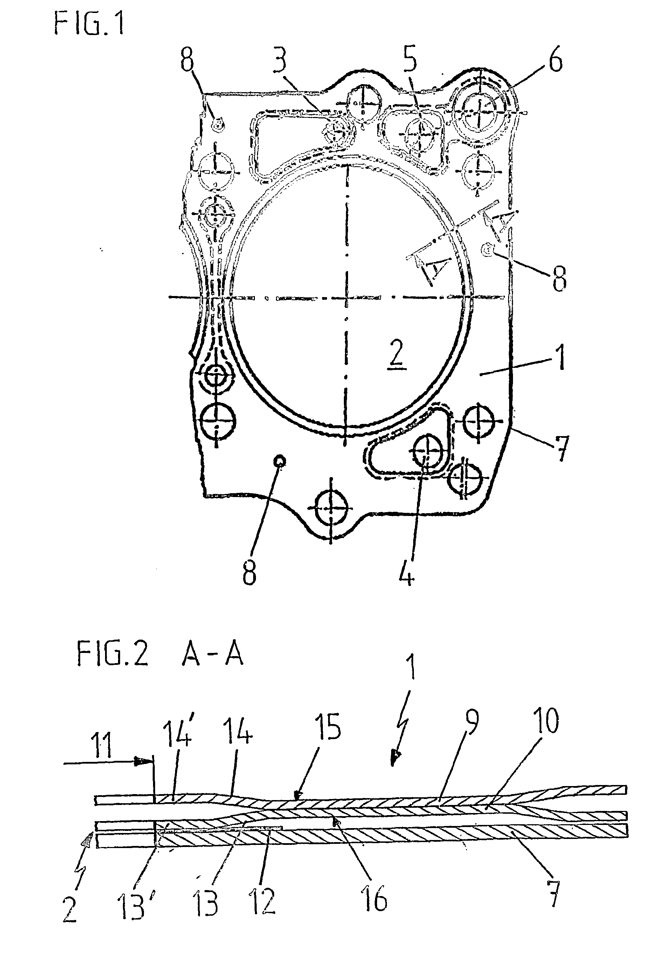

Figur 1 zeigt eine Zylinderkopfdichtung 1 mit einer Durchgangsöffnung 2 für den Brennraum und Flüssigkeitsdurchtrittsöffnungen 3, 4, 5, 6, einerseits für das Kühlmittel und andererseits für das Schmiermittel. Die Zylinderkopfdichtung 1 wird gebildet durch ein metallisches Trägerelement 7 sowie hier nicht erkennbare durch Nieten 8 damit verbundene Funktionslagen, die in den folgenden Figuren besser erkennbar sind.

Figur 2 zeigt einen Schnitt durch die Zylinderkopfdichtung 1 gemäß Figur 1. Erkennbar ist das Trägerelement 7 sowie zwei Federstahllagen 9, 10 als Funktionslagen. Mit dem Bezugszeichen 11 ist die Brennraumbegrenzungskante bezeichnet, die gleichzeitig die Begrenzungskante sowohl für das Trägerelement 7 als auch die Funktionslagen 9, 10 bildet. Brennraumseitig ist das Trägerelement 7 mit einem Stopperelement 12, beispielsweise durch Schweißen, verbunden, wobei das Stopperelement 12 die Durchgangsöffnung 2 mit vorgebbarer Breite und Dicke konzentrisch umgibt. Die elastische Abdichtung der brennraumseitigen Durchgangsöffnung 2 erfolgt hierbei durch eine konzentrisch zur Durchgangsöffnung 2 verlaufende Halbsicke 13, 14, die ebenfalls eine vorgebbare Breite und Höhe aufweist. Die jeweilige Halbsicke 13, 14 ist in die als Federstahllage ausgebildeten Funktionslagen 9, 10 eingeprägt. In diesem Beispiel kommt eine Kombination aus zwei gegensinnig gesickten Funktionslagen 9, 10 und einem das Stopperelement 12 aufnehmenden Trägerelement 7 zum Einsatz, wobei Alternativen mit mehreren Federstahllagen(paaren) in Verbindung mit oberen und unteren Trägerelementen ebenfalls denkbar sind.

Soll, wie in diesem Beispiel, eine gerade Anzahl (zwei) von Federstahllagen 9, 10 zum Einsatz gelangen, ist darauf zu achten, dass die gegensinnig mit Halbsicken 13, 14 versehenen Funktionslagen 9, 10 so angeordnet werden, dass sich die aus der jeweiligen Ebene 15, 16 hervorragenden Schenkel 13', 14' der Halbsicken 13, 14 an den hier nicht dargestellten Motorbauteilen anliegen. Die durch das Stopperelement 12 brennraumseitig hervorgerufene Verdickung bewirkt, dass die von den nicht weiter dargestellten Zylinderkopfschrauben bereitgestellte Klemmkraft maßgeblich auf die Verpressung der Halbsicken 13, 14 und damit zur Abdichtung des Brennraums aufgewendet wird. Dabei bestimmt der Betrag der Verdickung wesentlich die Klemmkraftverteilung und damit die Abdichteigenschaften.

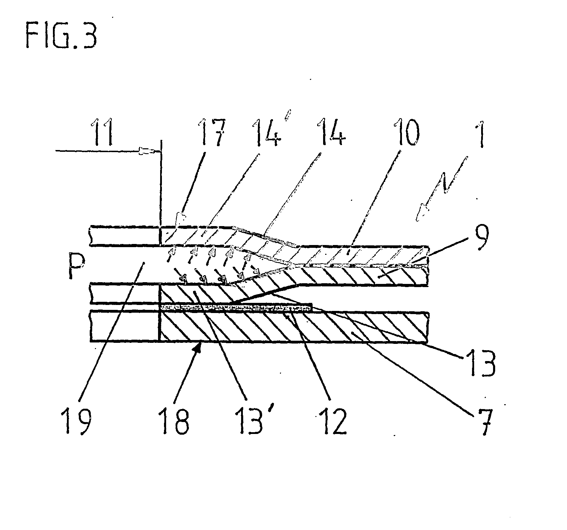

Figur 3 zeigt einen Teilausschnitt aus Figur 2, nämlich den brennraumseitigen Abdichtbereich. Erkennbar sind das Trägerelement 7, die Funktionslagen 9,10, das Stopperelement 12 sowie der Brennraumbereich. Simuliert wird hierbei der Einbauzustand der Zylinderkopfdichtung 1. Mit P ist der brennraumseitig anstehende alternierende Druck im Brennraum angesprochen. Die Bezugszeichen 17, 18 sollen hierbei die Dichtflächen einerseits für den Zylinderkopf und andererseits für den Motorblock darstellen. Durch Verspannung der nicht weiter dargestellten Zylinderkopfschrauben wird der zwischen den Halbsicken 13, 14 bestehende Spalt 19 gegen Null geführt, wobei er diesen Wert aufgrund der gegebenen Federeigenschaften der Halbsicken 13, 14 jedoch nicht erreicht. Durch das Stopperelement 12 bzw. dessen Materialstärke wird ein vollständiges Schließen des Spaltes 19 darüber hinaus verhindert. Das anstehende Gas mit dem Druck P ist nun in der Lage, in den Spalt 19 einzudringen und die Schenkel 13`, 14' wieder in Richtung der Dichtflächen 17, 18 aufzuweiten. Dadurch kann eine vorgebbare Verstärkung der Abdichtpressung durch Auffederung der Halbsicken 13, 14 respektive der Schenkel 13', 14' erzielt werden.

## Patentansprüche

1. Flachdichtung, insbesondere Zylinderkopfdichtung, für Brennkraftmaschinen, gebildet durch mindestens ein mit mindestens einer brennraumseitigen Durchgangsöffnung (2) versehenes insbesondere metallisches Trägerelement (7), wobei die Durchgangsöffnung (2) einerseits von einem konzentrisch dazu verlaufenden Stopperelement (12) und andererseits von mindestens einer konzentrisch dazu verlaufenden, in mindestens eine metallische Funktionslage eingebrachte elastisch wirkende Halbsicke (13,14) umgeben ist, die im Krafthauptschluss in einem gegenüber der Materialstärke des Trägerelementes (7) dicker ausgeführten Brennraumabdichtbereich (Stopperelement (12)) aufliegt, **dadurch gekennzeichnet, dass** zwei Funktionslagen (9, 10) mit gegensinnig verlaufenden Halbsicken (13,14) dergestalt übereinander vorgesehen sind, dass durch die Funktionslagen (9,10) ein in Richtung der Durchgangsöffnung (2) weisender Spalt (19) gebildet ist wobei das Trägerelement (7) eine plane Dichtungsaußenfläche bildet und Funktionslagen (9,10) und Trägerelement (7) eine gemeinsame Brennraumbegrenzungskante (11) aufweisen.

2. Flachdichtung nach einem der Anspruche 1, **dadurch gekennzeichnet, dass** das Trägerelement (7) aus Edelstahl und die mit den Halbsicken (13, 14) versehenen metallischen Funktionslagen (9, 10) aus Federstahl gebildet sind.

3. Flachdichtung nach einem der Ansprüche 1 bis 2, **dadurch gekennzeichnet, dass** das Stopperelement (12) eine größere Breite als die jeweilige Halbsicke (13, 14) aufweist.

## Claims

1. Flat gasket, in particular cylinder head gasket, for internal combustion engines, formed by at least one, in particular metal, support element (7) provided with at least one passage (2) on the combustion chamber side, wherein the passage (2) is surrounded on one side by a stopper element (12) running concentrically to it and on the other side by at least one elastically effective half-crimp (13, 14) running concentrically to it and incorporated into at least one metal function layer, in the primary friction connection said half-crimp rests in a sealing region of the combustion chamber (stopper element (12)) configured to be thicker than the material thickness of the support element (7), **characterised in that** two function layers (9, 10) with half-crimps (13, 14) running in contrary direction are provided one above the other such that a gap (19) pointing in the direction of the passage (2) is formed by the function layers (9, 10), wherein the support element (7) forms a plane outer sealing surface and the function layers (9, 10) and support element (7) have a common combustion chamber boundary edge (11).

2. Flat gasket according to Claim 1, **characterised in that** the support element (7) is made of special steel and the metal function layers (9, 10) provided with half-crimps (13, 14) are formed from spring steel.

3. Flat gasket according to one of Claims 1 to 2, **characterised in that** the stopper element (12) has a larger width than the respective half-crimp (13, 14).

## Revendications

1. Joint plat, en particulier joint de culasse, pour des moteurs à combustion interne, formé par au moins un élément de support (7), en particulier métallique, muni au moins d'une ouverture de passage (2) du côté chambre de combustion, l'ouverture de passage (2) étant entourée, d'une part, par un élément de bouchage (12) s'étendant concentriquement autour de celle-ci et, d'autre part, par au moins une demi-moulure (13, 14), agissant de manière élastique, introduite dans au moins une couche fonctionnelle métallique s'étendant concentriquement autour de ladite ouverture de passage, ladite demi-moulure étant en appui dans l'assemblage principal par adhérence dans une zone d'étanchéité de la chambre de combustion (élément de bouchage 12) plus épaisse par rapport à l'épaisseur du matériau de l'élément de support (7), **caractérisé en ce que** deux couches fonctionnelles (9, 10), comportant des demi-moulures (13, 14), s'étendant en sens inverse, sont prévues l'une au-dessus de l'autre de telle sorte qu'une fente (19) orientée vers l'ouverture de passage (2) est formée par les couches fonctionnelles (9, 10), l'élément de support (7) formant une surface extérieure d'étanchéité plane et les couches fonctionnelles (9, 10) et l'élément de support (7) ayant un bord (11) commun délimitant la chambre de combustion.

2. Joint plat selon la revendication 1, **caractérisé en ce que** l'élément de support (7) est réalisé en acier spécial et les couches fonctionnelles (9, 10) métalliques munies des demi-moulures (13, 14) sont réalisées en acier à ressort.

3. Joint plat selon l'une quelconque des revendications 1 à 2, **caractérisé en ce que** l'élément de bouchage (12) a une largeur plus grande que chacune des demi-moulures (13, 14).
